# EUROPEAN PATENT SPECIFICATION

(11) **EP 2 771 292 B1**
(45) Date of publication and mention of the grant of the patent: **07.03.2018**
(21) Application number: 12844159.9
(22) Date of filing: 29.10.2012
(51) Int. Cl.: C02F 103/42, B01D 29/21, B01D 29/68, C02F 1/00

(54) **WATER FILTER**
WASSERFILTER
FILTRE À EAU

(30) Priority: 28.10.2011 US 201113317793
(43) Date of publication of application: 03.09.2014
(73) Proprietor: Hegi, Petra, Fort Myers, Florida 33913 (US)
(72) Inventor: HEGI, Ulrich, Fort Myers, FL 33913-8201 (US)
(74) Representative: Gallo, Wolfgang
(86) International application number: PCT/US2012/000526
(87) International publication number: WO 2013/062610

(56) References cited:
- US-A- 3 363 771
- US-A- 4 906 373
- US-A- 4 906 373
- US-A- 5 989 419
- US-A- 6 156 213
- US-A- 6 156 213
- US-A1- 2003 098 273
- US-A1- 2004 200 770
- US-A1- 2004 200 770
- US-A1- 2006 005 859

## Description

### Background of the Invention

The invention resides in a water filter through which the water of for example a pool is circulated for the removal of impurities.

Water pools in the form of for example swimming pools or fountain pools as present for example in shopping malls or gated communities or parks or even in front yards of residences require cleaning of the water by pool water filters in order to prevent the water from fouling up.

Such a pool filter comprises a housing in which a filter cartridge or another filter structure is arranged in a filter housing for filtering the water of the pool.. The pool water is circulated through the filter housing via an inlet pipe and leaves the filter housing through an outlet pipe arranged so that the water is conducted in the filter housing through the filter structure. The filter structure needs to be cleaned or replaced from time to time to prevent clogging thereof. For cleaning the filter structure, the housing generally needs to be opened to remove the filter structure for the cleaning or replacement.

US 7 794 591 discloses for example a pool filter with a housing defining a fluid chamber and including four filter cartridges. The pool water is pumped from the pool into the housing and radially through the filter cartridges and flows axially out of the filter cartridges into a discharge pipe via which the cleaned water is returned to the pool. Impurities are deposited on the outer surfaces of the filter cartridges. From time to time, the housing needs to be opened for the replacement of the filter cartridges.

Document US3363771 discloses a liquid filter comprising a rotor and having a screen as side wall and an elongated inlet in closely spaced relationship to said screen surface for introducing liquid under pressure for impingement against the screen. It is the object of the present invention to provide a water filter with a filter structure disposed in a housing wherein impurities are uniformly deposited on the filter surfaces for long filtering periods and effective cleaning operation and the filter structure does not need to be removed for cleaning but filter cleaning is performed automatically in a simple and very effective manner while the filter structure remains installed in the housing.

### Summary of the Invention

In a water filter according to claim 1, for filtering the water of a water pool such as a swimming or fountain pool, including a filter housing, a filter structure is rotatably supported off-center in the filter housing so that it is arranged at one side in close proximity with a housing wall and, at the opposite side, a housing space is formed between the filter structure and the housing wall in which two filter cleaning nozzle tubes are arranged. The nozzle tube has nozzle openings directed toward the filter structure for washing deposits off the filter. A pool water inlet is connected to filter housing bottom wall in the area of the housing space and a return pipe is connected to the bottom wall in communication with a center passage of the filter structure so that pool water can b.e circulated through the filter structure while the filter structure is rotated. The inlet pipe includes a valve for blocking the water flow to the filter housing and a drain opening for draining water from the filter housing during filter cleaning operation.

Since in this pool filter, the filter structure is rotated the deposits are evenly distributed on the filter survia which the cleaned water is returned to the pool. Impurities are deposited on the outer surfaces of the filter cartridges. From time to time, the housing needs to be opened for the replacement of the filter cartridges.

It is the object of the present invention to provide a water filter with a filter structure disposed in a housing wherein impurities are uniformly deposited on the filter surfaces for long filtering periods and effective cleaning operation and the filter structure does not need to be removed for cleaning but filter cleaning is performed automatically in a simple and very effective manner while the filter structure remains installed in the housing.

### Summary of the Invention

In a water filter for filtering the water of a water pool such as a swimming or fountain pool including a filter housing, a filter structure is rotatably supported off-center in the filter housing so that it is arranged at one side in close proximity with a housing wall and, at the opposite side, a housing space is formed between the filter structure and the housing wall in which at least one filter cleaning nozzle tube is arranged. The nozzle tube has nozzle openings directed toward the filter structure for washing deposits off the filter. A pool water inlet pipe is connected to filter housing bottom wall in the area of the housing space and a return pipe is connected to the bottom wall in communication with a center passage of the filter structure so that pool water can be circulated through the filter structure while the filter structure is rotated. The inlet pipe includes a valve for blocking the water flow to the filter housing and a drain opening for draining water from the filter housing during filter cleaning operation.

Since in this pool filter, the filter structure is rotated the deposits are evenly distributed on the filter surfaces whereby an efficient and effective cleaning process can be maintained over a relatively long period. And when the deposits are beginning to restrict the flow of water through the filter structure, the filter is automatically and effectively cleaned by cleaning water jets emitted by the nozzles of the filter cleaning tube arranged in the filter housing. The filter therefore is operative over long periods without requiring servicing.

The invention will become more readily apparent from the following description of a particular embodiment thereof with reference to the accompanying drawings.

### Brief Description of the Drawings

Fig. 1 shows the cleaning nozzle tube,
Fig. 2 is an axial cross-sectional view of the pool filter according to the invention,
Fig. 3 is a cross-sectional view taken along line A - A of Fig. 2, and
Fig. 4 is a bottom view of the tool filter.

### Description of a Particular Embodiment

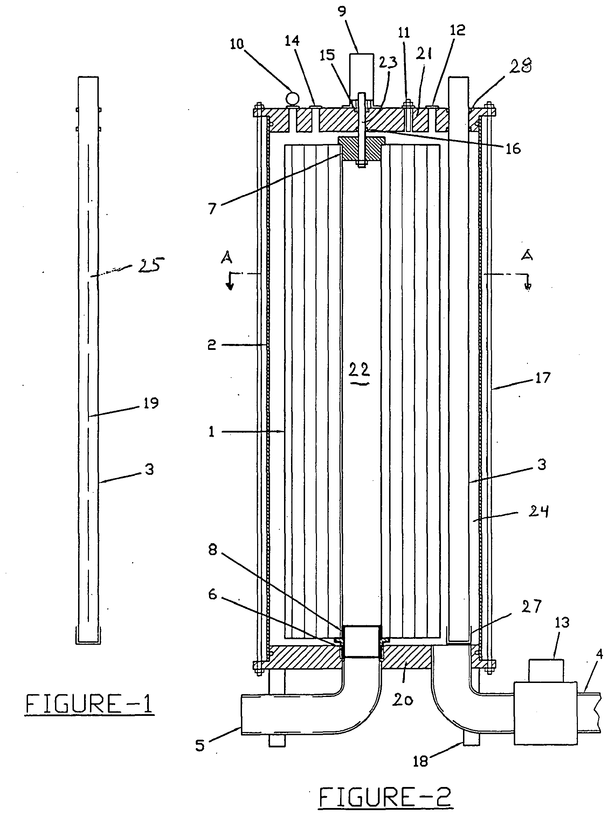

Fig. 2 shows the water filter according to the invention in an axial cross-sectional view. It comprises a housing 2 with a preferably cylindrical wall provided at opposite ends with a bottom end wall 20 and a top end wall 21 which are sealingly joined to the cylindrical housing wall for example by connecting rods 17. Within the housing 2, a filter structure 1 is rotatably supported between the opposite end walls 20, 21 of the housing 2. The filter structure 1 comprises an annular array of pleated sheets arranged around a central passage 22. The filter structure 1 is supported off-center within the housing so that, at one side, there is little space between the filter and the side wall of housing 2 as the filter is disposed closely adjacent to the wall of the housing 2 whereas a substantially larger housing space 24 is formed between the opposite wall area of the housing 2 and the filter structure 1. A pool water supply pipe 4 is connected to the bottom end wall 20 for supplying pool water to the larger housing space 24 of the filter housing. A discharge pipe is connected to the bottom end wall 20 in alignment, with the central passage 22 of the filter structure 1 so that pool water supplied to the filter housing via the supply pipe flows from the housing space around the filter 1 through the filter structure 1 into the central filter passage 22 and from there, via the discharge pipe 5 back to the pool.

The passage 22 of the filter structure 1 is closed at its top by a plug 7 connected: to the filter structure 1 and is rotatably supported at the bottom end wall 20 by an adapter 8 and a sealed bearing 6.

A filter structure drive with a motor 9 with a drive shaft 23 is disposed on the top end wall of the filter. The drive shaft 23 extends through the top end wall 21 in axial alignment with the filter structure 1 and is supported by a shaft bearing 16 disposed in the top end walls 21. The drive shaft 23 is sealed by a seal 15 and connected to the plug 7 which also forms a support member engaging the filter structure 1 for: rotating the filter structure 1.

In the large housing space 24 between the filter structure 1 and the wall of the housing 2 a cleaning nozzle tube 3 is arranged adjacent the filter structure 1. The nozzle tube 3 includes cleaning water nozzles 19 disposed over the length of the nozzle tube 3 for directing water jets onto the pleated filter walls during filter cleaning intervals. During such intervals water under pressure is supplied to the cleaning nozzle tube 3 so as to direct water jets onto the filter while the filter structure 1 is rotated. Any deposits are washed away thereby and are carried out of the filter housing by way of the inlet pipe 4 which, at this point, is connected to a drain for discharging the cleaning water together with the deposits. A switch-over valve arrangement 13 is provided in the pool water supply line 4. For cleaning, fresh water or pool water could be used, which is conducted into the nozzle tube pipe 3 at its end extending through the top end wall 21. Two spaced nozzle tubes 3 are provided and they are pivotally supported by an adapter 27 at the bottom end wall 20 and seals 28 at the top end wall 21. Expediently both nozzle tubes 3 are pivotally supported so that the jets from the nozzles 19 of the tubes 3 can be directed in different adjustable directions onto the filter structure 1.

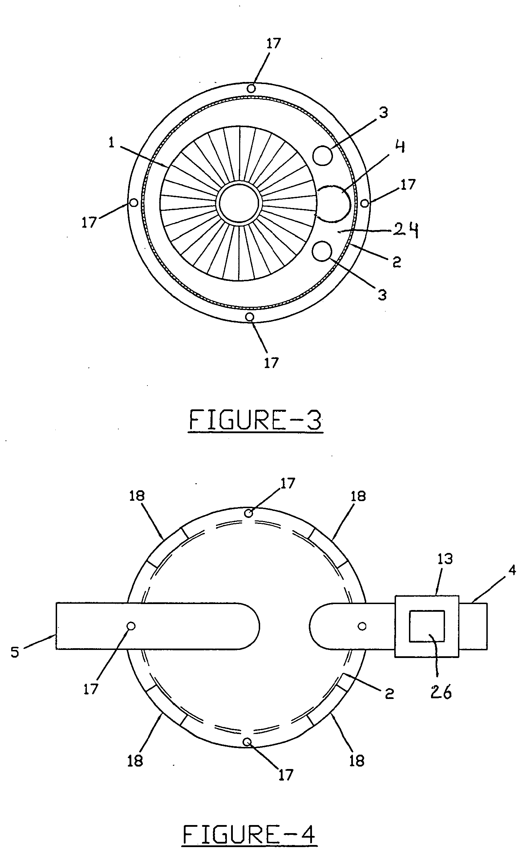

As indicated in Fig. 4, the nozzle tubes 3 include slot nozzles 19 each extending over a certain length of the nozzle tubes 3. Connecting webs 25 are provided at predetermined intervals to prevent widening of the slot nozzles. Alternatively, individual nozzles may be arranged side by side in spaced relationship along the length of the pipe 3 for cleaning the whole filter structure 1 while the filter structure is rotated. The slot nozzles may have for example a width of 0.25 mm.

Rotation of the filter structure not only during cleaning but also during normal filtering operation provides for a uniform deposition of the filtered-out material thereby not only providing for a relatively long filtering operation between cleaning intervals but also for a uniform and effective cleaning of the water passing through the filter.

The filter housing 2 is supported by legs 18 provided preferably at the bottom end wall 20 of the filter. The filter adapter 8 sealed and the sealed bearing 6 rotatably supporting the filter 1 provide for a sealing connection between the central filter passage 22 and the outlet pipe 5.

On the top end wall 21 of the filter housing 2, a pressure gauge 10 is arranged for measuring the back pressure of the pool water in the filter housing 2. There is furthermore a venting opening 11 closed by a removable plug or by a valve for releasing any air or gases collected in the filter housing 2. The top end wall 21 further includes a pressure sensor 12 and a pH sensor 14 for monitoring the pool water conditions. The pool water supply line 4 includes a switch-over valve 13 for blocking communication with the pool and controlling a drain opening 26 for releasing wash water from the filter housing 2 during filter cleaning operation.

A filter cleaning operation is initiated when the back pressure within the filter housing 2 reaches a predetermined threshold value indicating a certain filter resistance caused by a deposit layer on the filter surfaces. Then.the drain 26 is opened and the pool water supply line 4 is blocked by the switch-over valve 13, which is preferably an electromagnetic valve. Wash water is then pumped into the cleaning nozzle tubes 3 whereby water jets are directed onto the filter surfaces for washing off the filter deposits. The filter structure 1 is continuously rotated during the cleaning operation so that all filter surfaces are subjected to the water jets and the filter deposits are washed off and carried out of the filter housing 2 via the drain opening 26 of the switch-over valve 13. At the end of the cleaning interval the switch-over valve is again actuated to close the drain 26 and reestablish communication with the pool water supply line 4 so that normal filtering operation can be resumed.

As already noted, by the rotation of the filter structure impurities are uniformly deposited on the filter and, during the cleaning procedure, the deposits are uniformly removed by the cleaning jets of the nozzle tubes 3 within a predetermined period. The cleaning periods are individually adjustable depending on the respective application. After completion of the cleaning operation, first the water supply to the nozzle tubes 3 and preferably also he drive motor 9 are shut down while the wash water including the deposits is permitted to flow out of the filter via the valve 13 for example for five minutes, after which time the valve 13 is closed. Then, for example after two more minutes, the pool circulation pumps and the drive motor 9 for rotating the filter are again started so that normal filtering operation is resumed.

During operation, the pH measuring device 14 constantly monitors the pH value of the pool water and provides for example an optical or audible signal whenever the pH value drops below or above predetermined threshold values so that appropriate measures can be taken to correct the situation without the need for taking pool water samples and analyzing them.

**Listing of References Numerals**

| | |
|---|---|
| 1 | Filter structure |
| 2 | Filter housing |
| 3 | Cleaning nozzle tube |
| 4 | Pool water inlet pipe |
| 5 | Pool water outlet pipe |
| 6 | Lower bearing |
| 7 | Filter plug and support member |
| 8 | Filter adapter |
| 9 | Drive motor |
| 10 | Pressure sensor |
| 11 | Venting screw |
| 12 | Pressure sensor |
| 13 | Valve |
| 14 | pH measuring device |
| 15 | Seal ring |
| 16 | Upper bearing |
| 17 | Threaded rod |
| 18 | Support leg |
| 19 | nozzle slot |
| 20 | Bottom end wall |
| 21 | Top end wall |
| 22 | Central passage |
| 23 | Drive shaft |
| 24 | Housing space |
| 25 | Web between nozzle slots |
| 26 | Drain opening |
| 27 | Nozzle tube adapter |
| 28 | Seals |

## Claims

1. A water filter for filtering the water of pools, comprising:
a filter housing (2) including side walls and bottom and top end walls 20, 21 attached to the side walls so as to close the filter housing (2),
an annular filter structure (1) with a central passage (22) rotatably supported by the bottom and top end walls (20, 21)
a nozzle tube (3) arranged in the housing (2) along the filter structure (1) and having nozzle openings directed toward the filter structure (1) for washing deposits off the filter structure (1) during cleaning operation of the filter structure (1),
a drive device (9) for rotating the filter structure (1),
a supply pipe (4) connected to the filter housing for conducting pool water to the housing space around the filter structure (1) and directing the pool water through the filter structure (1) into the central passage (22) of the filter structure (1), and
a return pipe (5) connected to the central passage (22) of the filter structure (1) for receiving the filtered water and conducting it back to the pool,
**characterized in that**
said filter structure (1) is positioned in the filter housing (2) in an off-center position so that at one side the filter structure is arranged in close proximity of the side wall of the housing (2) but, at the opposite side, is arranged spaced from the side wall so as to form adjacent the filter structure (1) a larger housing space (24) extending over the length of the filter structure (1),
said drive device (9) is disposed on the top end wall (21) with a drive shaft (23) extending through the top end wall (21),
said supply pipe is connected to the bottom end wall (20) of the housing (2) in the area of said larger housing space (24),
said return pipe is connected to the bottom end wall (20) of the housing (2) in axial alignment with the central passage (22) of the filter structure (1),
and two nozzle tubes (3) are arranged in the larger housing space (24) in spaced relationship and pivotally supported so that the jets from the nozzles (19) of the nozzle tubes (9) can be directed in different adjustable directions onto the filter structure (1).

2. The water filter according to claim 1, wherein the filter structure (1) comprises pleated filter sheets arranged in an annular array defining within the central passage (22).

3. The water filter according to claim 2, wherein the central passage (22) of the filter structure (1) is plugged at the top by a plug member (7) firmly connected to the filter structure (1), and the drive shaft (23) is connected to the plug member (7).

4. The water filter according to claim 1, wherein the nozzle tubes (3) are provided with slot nozzles (19) extending axially along the nozzle tube (3) interrupted only by webs (25) for maintaining a predetermined slot gap.

5. The water filter according to claim 4, wherein the slot nozzles (19) have a gap width of about 0,25 mm.

6. The water filter according to claim 1, wherein a valve device (13) is arranged in the inlet supply pipe (4) for blocking the water flow to the filter structure (1) and including a drain opening (26) for draining the wash water from the filter structure (1) during cleaning operation.

7. The water filter according to claim 1, wherein the filter housing (2) is cylindrical so that from the area of closest proximity of the off center disposed filter structure (1) to the housing (2) the space between the filter structure (1) and the wall of the cylindrical housing (2) widens continuously to the opposite larger housing space (24) where the cleaning nozzle tubes (3) are arranged.

## Patentansprüche

1. Wasserfilter zum Filtern von Wasser in Becken, umfassend:
ein Filtergehäuse (2) mit Seitenwänden und unteren und oberen Endwänden (20, 21), die an den Seitenwänden fixiert sind, um das Filtergehäuse (2) abzuschließen,
eine ringförmige Filterstruktur (1) mit einem zentralen Durchgang (22), die drehbar von den oberen und unteren Endwänden (20, 21) gelagert wird;
ein Düsenrohr (3), das in dem Gehäuse (2) entlang der Filterstruktur (1) angeordnet ist und Düsenöffnungen aufweist, die zu der Filterstruktur (1) hinweisen, um Ablagerungen von der Filterstruktur (1) während eines Reinigungsvorgangs der Filterstruktur (1) abzuwaschen,
eine Antriebsvorrichtung (9) zum Drehen der Filterstruktur (1),
ein Zufuhrrohr (4), das mit dem Filtergehäuse verbunden ist, um Beckenwasser an den Gehäuseraum um die Filterstruktur (1) herum zu leiten, und das Beckenwasser durch die Filterstruktur (1) in den zentralen Durchgang (22) der Filterstruktur (1) zu leiten, und
ein Rücklaufrohr (5), das mit dem zentralen Durchgang (22) der Filterstruktur (1) verbunden ist, um das gefilterte Wasser aufzunehmen und es in das Becken zurückzuleiten,
**dadurch gekennzeichnet, dass**
die Filterstruktur (1) in dem Filtergehäuse (2) in einer außermittigen Stellung angeordnet ist, so dass eine Seite der Filterstruktur in unmittelbarer Nähe der Seitenwand des Gehäuses (2) angeordnet ist, an der gegenüberliegenden Seite jedoch in einem Abstand von der Seitenwand angeordnet ist, um benachbart zu der Filterstruktur (1) einen größeren Gehäuseraum (24) zu bilden, der sich über die Länge der Filterstruktur (1) erstreckt,
wobei die Antriebsvorrichtung (9) an der oberen Endwand (21) angeordnet ist, wobei eine Antriebswelle (23) sich durch die obere Endwand (21) hindurch erstreckt,
wobei das Zufuhrrohr mit der unteren Endwand (20) des Gehäuses (2) in dem Bereich des größeren Gehäuseraums (24) verbunden ist,
wobei das Rücklaufrohr mit der unteren Endwand (20) des Gehäuses (2) in axialer Ausrichtung mit dem zentralen Durchgang (22) der Filterstruktur (1) verbunden ist,
und zwei Düsenrohre (3) in dem größeren Gehäuseraum (24) so in einer beabstandeten Beziehung angeordnet und schwenkbar gelagert sind, dass die Strahlen von den Düsen (19) der Düsenrohre (3) in unterschiedliche einstellbare Richtungen auf die Filterstruktur (1) geleitet werden können.

2. Wasserfilter nach Anspruch 1, wobei die Filterstruktur (1) Faltfilterbögen umfasst, die in einer ringförmigen Anordnung angeordnet sind, die darin den zentralen Durchgang (22) definiert.

3. Wasserfilter nach Anspruch 2, wobei der zentrale Durchgang (22) der Filterstruktur (1) an der Oberseite durch ein Stopfenelement (7) verschlossen ist, das fest mit der Filterstruktur (1) verbunden ist, und die Antriebswelle (23) mit dem Stopfenelement (7) verbunden ist.

4. Wasserfilter nach Anspruch 1, wobei die Düsenrohre (3) mit Schlitzdüsen (19) versehen sind, die sich axial entlang des Düsenrohrs (3) erstrecken und nur von Stegen (25) zum Aufrechterhalten einer vorbestimmten Schlitzweite unterbrochen sind.

5. Wasserfilter nach Anspruch 4, wobei die Schlitzdüsen (19) eine Spaltweite von etwa 0,25 mm aufweisen.

6. Wasserfilter nach Anspruch 1, wobei eine Ventilvorrichtung (13) in dem Einlasszufuhrrohr (4) angeordnet ist, um die Wasserströmung an die Filterstruktur (1) zu blockieren, und eine Ablauföffnung (26) zum Ablassen des Waschwassers von der Filterstruktur (1) während des Reinigungsvorgangs umfasst.

7. Wasserfilter nach Anspruch 1, wobei das Filtergehäuse (2) zylindrisch ist, so dass von dem Bereich der größten Nähe der außermittig angeordneten Filterstruktur (1) zu dem Gehäuse (2) der Raum zwischen der Filterstruktur (1) und der Wand des zylindrischen Gehäuses (2) sich kontinuierlich bis zum gegenüberliegenden größeren Gehäuseraum (24) aufweitet, wo die Reinigungsdüsenrohre (3) angeordnet sind.

## Revendications

1. Filtre à l'eau pour la filtration de l'eau des piscines, le filtre comprenant :
un boîtier de filtre (2) comportant des parois latérales et des parois terminales inférieure et supérieure (20, 21) fixées aux parois latérales pour fermer le boîtier de filtre (2),
une structure de filtre annulaire (1) avec un passage central (22) supporté en rotation par les parois terminales inférieure et supérieure (20, 21) ;
un tube de buse (3) disposé dans le boîtier (2) le long de la structure de filtre (1) et ayant des ouvertures de buse dirigées vers la structure de filtre (1), pour laver des dépôts de la structure de filtre (1) pendant une opération de nettoyage de la structure de filtre (1),
un dispositif d'entraînement (9) pour faire tourner la structure de filtre (1),
un tube d'alimentation (4) relié au boîtier de filtre pour conduire de l'eau de la piscine au l'espace du boîtier autour de la structure de filtre (1), et pour diriger l'eau de la piscine à travers de la structure de filtre (1) dans un passage central (22) de la structure de filtre (1), et
un tube de retour (5) relié au passage central (22) de la structure de filtre (1) pour recevoir et transporter l'eau filtre retour à la piscine,
**caractérisé en ce que**
la structure de filtre (1) est positionnée dans le boîtier de filtre (2) dans une position décentrée, de telle manière qu'un côté de la structure de filtre est disposé à proximité immédiate de la paroi latérale du boîtier (2), mais espacée de la paroi latérale au côté opposé, de telle manière qu'un espace (24) plus grand du boîtier est formé à proximité de la structure de filtre (1), l'espace s'étendant le long de la longueur de la structure de filtre (1),
le dispositif d'entraînement (9) est disposé au niveau de la paroi terminale supérieure (21), avec un arbre d'entraînement (23) s'étendant à travers la paroi terminale supérieure (21),
le tube d'alimentation est relié à la paroi terminale inférieure (20) du boîtier (2) dans la région de l'espace (24) plus grand du boîtier,
le tube de retour est relié à la paroi terminale inférieure (20) du boîtier (2) en alignement axial avec le passage central (22) de la structure de filtre (1),
et deux tubes de buse (3) sont disposés dans l'espace (24) plus grand du boîtier en relation espacée et supportés de manière pivotable, de telle manière que les jets provenant des buses (19) des tubes de buse (3) peuvent être dirigés vers la structure de filtre (1) dans des directions différentes et ajustables.

2. Filtre à l'eau selon la revendication 1, dans lequel la structure de filtre (1) comprend des feuilles filtrantes plissées et disposées en agencement annulaire qui définit le passage central (22) à son intérieur.

3. Filtre à l'eau selon la revendication 2, dans lequel le passage central (22) de la structure de filtre (1) est bouché en haut par un élément de bouche (7) solidement relié à la structure du filtre (1), et l'arbre d'entraînement (23) est relié à l'élément de bouche (7).

4. Filtre à l'eau selon la revendication 1, dans lequel les tubes de buse (3) sont prévus avec des buses à fente (19) qui s'étendent axialement du tube de buses (3) et sont interrompues seulement par des barres (25) pour maintenir une largeur prédéterminée de fente.

5. Filtre à l'eau selon la revendication 4, dans lequel les buses à fente (19) ont une largeur de fente d'environ 0,25 mm.

6. Filtre à l'eau selon la revendication 1, dans lequel un dispositif de soupape (13) est disposé dans le tube d'alimentation (4) pour bloquer l'écoulement de l'eau vers la structure de filtre (1), et comporte une ouverture de drainage (26) pour évacuer l'eau de lavage de la structure de filtre (1) pendant l'opération de nettoyage.

7. Filtre à l'eau selon la revendication 1, dans lequel le boîtier de filtre (2) est cylindrique de telle manière que, à partir de la région de proximité immédiate de la structure de filtre (1), disposée en position décentrée, du boîtier (2) jusqu'à l'espace (24) plus grand du boîtier, l'espace entre la structure de filtre (1) et la paroi du boîtier cylindrique (2) s'élargit continuellement vers l'espace (24) plus grand du boîtier où les tubes de buses (3) pour le nettoyage sont situés.
